# EUROPEAN PATENT APPLICATION

(11) **EP 4 553 397 A1**
(43) Date of publication of application: **14.05.2025**
(21) Application number: 22958033.7
(22) Date of filing: 05.09.2022
(51) Int. Cl.: F24F 11/52

(54) **REGION SETTING DEVICE, REGION SETTING METHOD, AND REGION SETTING PROGRAM**

(71) Applicant: MITSUBISHI ELECTRIC CORPORATION, Chiyoda-ku Tokyo 100-8310 (JP)
(72) Inventor: WATANABE, Futa, Tokyo 100-8310 (JP)
(74) Representative: Pfenning, Meinig & Partner mbB
(86) International application number: PCT/JP2022/033210
(87) International publication number: WO 2024/052949

(57) **Abstract**

An image acquisition unit (21) acquires image data obtained by capturing an image of an indoor unit of an air conditioner. An air outlet detection unit (22) gives, as input, the image data of the indoor unit acquired by the image acquisition unit (21) to an object detection model to detect an air outlet. An area setting unit (23) sets an area of interest to be a range in which a detection target, such as a light emitter installed in the indoor unit or an identification number displayed on the indoor unit, is to be detected, based on a detected area of the air outlet detected by the air outlet detection unit (22).

## Description

### Technical Field

The present disclosure relates to a technology for detecting a light emitter or the like in an indoor unit of an air conditioner.

### Background Art

An indoor unit of an air conditioner is equipped with a light emitter such as an LED. LED is an abbreviation for light-emitting diode. By reading lighting or blinking of this light emitter using a terminal such as a smartphone, operating information of the air conditioner can be transmitted to the terminal. It is conceivable to use the transmitted operating information for maintenance of the air conditioner, for example.

Each of air outlets provided in the indoor unit of the air conditioner is assigned an identification number, which is displayed near each of the air outlets. By reading this identification number using a terminal such as a smartphone, a desired one of the air outlets can be operated from the terminal.

As in these examples, it is effective to appropriately detect the light emitter or the like in the indoor unit of the air conditioner using the terminal. One possible method for detecting the light emitter or the like using the terminal is to detect the light emitter or the like from image data captured by an imaging device.

However, the method for detecting the light emitter or the like from image data may mistakenly detect an object with similar characteristics to those of the light emitter or the like. Objects with similar characteristics to those of the light emitter include the surface of the housing of the indoor unit illuminated by lighting and a light emitter of a wireless device installed on the ceiling.

Patent Literature 1 describes a technology for detecting a traffic light using an in-vehicle camera. In Patent Literature 1, the position and orientation of a vehicle and map information are used to set an area in which a traffic light is likely to appear in image data obtained by the in-vehicle camera. This aims to improve the accuracy of traffic light detection.

### Citation List

### Patent Literature

Patent Literature 1: WO 2017/009934 A1

### Summary of Invention

### Technical Problem

In Patent Literature 1, the accuracy of traffic light detection is improved by setting an area in which a traffic light is likely to appear, thereby eliminating sections with similar characteristics to those of the traffic light. However, when the light emitter in the indoor unit of the air conditioner is to be detected, it is not easy to obtain the position and orientation of a person or camera that captures an image and map information of a location where the image is captured. Therefore, it is not realistic to use the technology described in Patent Literature 1 to set an area in which a light emitter or the like is likely to appear.

An object of the present disclosure is to make it possible to detect a light emitter or the like in an indoor unit of an air conditioner with high accuracy.

### Solution to Problem

An area setting device according to the present disclosure includes
an air outlet detection unit to detect an air outlet from image data captured of an indoor unit of an air conditioner; and
an area setting unit to set an area of interest based on a detected area of the air outlet detected by the air outlet detection unit, the area of interest being a range in which a detection target in the indoor unit is to be detected.

### Advantageous Effects of Invention

In the present disclosure, an area of interest to be a range in which a detection target in an indoor unit is to be detected is set based on a detected area in which an air outlet of the indoor unit has been detected.

The air outlet is larger in size than a light emitter or the like and thus can be easily detected. Therefore, it is relatively easy to set the area of interest.

### Brief Description of Drawings

Fig. 1 is a configuration diagram of an area setting device 10 according to Embodiment 1;
Fig. 2 is a diagram describing an indoor unit 50 of an air conditioner according to Embodiment 1;
Fig. 3 is a flowchart illustrating processing by the area setting device 10 according to Embodiment 1;
Fig. 4 is a diagram describing image data 61 according to Embodiment 1;
Fig. 5 is a diagram describing a detected area 62 according to Embodiment 1;
Fig. 6 is a diagram describing an area setting process according to Embodiment 1;
Fig. 7 is a diagram describing the area setting process according to Embodiment 1;
Fig. 8 is a diagram describing a setting method 2 for a reference figure 67 according to Embodiment 1;
Fig. 9 is a diagram describing a setting method 3 for the reference figure 67 according to Embodiment 1;
Fig. 10 is a configuration diagram of the area setting device 10 according to Variation 1;
Fig. 11 is a configuration diagram of the area setting device 10 according to Embodiment 2; and
Fig. 12 is a flowchart illustrating a flow of processing by the area setting device 10 according to Embodiment 2.

### Description of Embodiments

### Embodiment 1.

### *** Description of Configuration ***

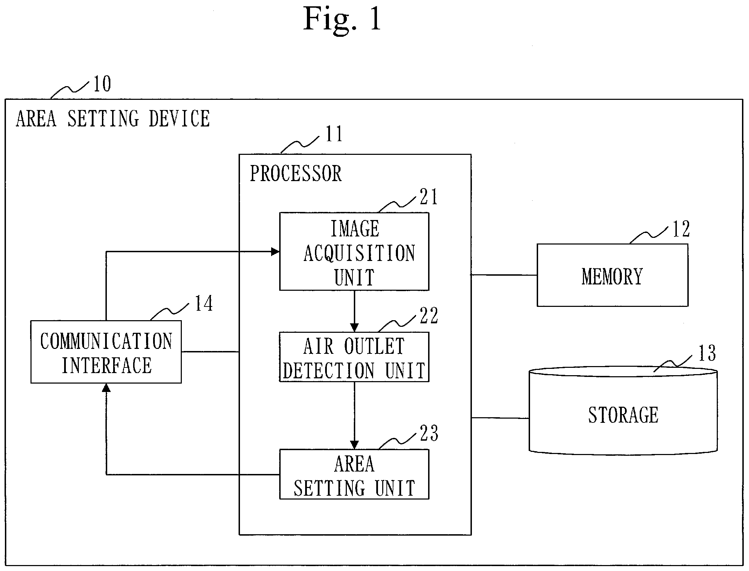

Referring to Fig. 1, a configuration of the area setting device 10 according to Embodiment 1 will be described.

The area setting device 10 is a computer.

The area setting device 10 includes hardware such as a processor 11, a memory 12, a storage 13, and a communication interface 14. The processor 11 is connected with other hardware components through signal lines and controls these other hardware components.

The processor 11 is an IC that performs processing. IC is an abbreviation for integrated circuit. Specific examples of the processor 11 are a CPU, a DSP, and a GPU. CPU is an abbreviation for central processing unit. DSP is an abbreviation for digital signal processor. GPU is an abbreviation for graphics processing unit.

The memory 12 is a storage device to temporarily store data. Specific examples of the memory 12 are an SRAM and a DRAM. SRAM is an abbreviation for static random access memory. DRAM is an abbreviation for dynamic random access memory.

The storage 13 is a storage device to store data. A specific example of the storage 13 is an HDD. HDD is an abbreviation for hard disk drive. Alternatively, the storage 13 may be a portable recording medium such as an SD (registered trademark) memory card, CompactFlash (registered trademark), a NAND flash, a flexible disk, an optical disc, a compact disc, a Blu-ray (registered trademark) disc, or a DVD. SD is an abbreviation for Secure Digital. DVD is an abbreviation for digital versatile disk.

The communication interface 14 is an interface for communicating with external devices. Specific examples of the communication interface 14 are an Ethernet (registered trademark) port, a USB port, and an HDMI (registered trademark) port. USB is an abbreviation for Universal Serial Bus. HDMI is an abbreviation for High-Definition Multimedia Interface.

The area setting device 10 includes, as functional components, an image acquisition unit 21, an air outlet detection unit 22, and an area setting unit 23. The functions of the functional components of the area setting device 10 are realized by software.

The storage 13 stores programs that realize the functions of the functional components of the area setting device 10. These programs are read into the memory 12 by the processor 11 and executed by the processor 11. This realizes the functions of the functional components of the area setting device 10.

In Fig. 1, only one processor 11 is illustrated. However, there may be a plurality of processors 11, and the plurality of processors 11 may cooperate to execute the programs that realize the functions.

### *** Description of Operation ***

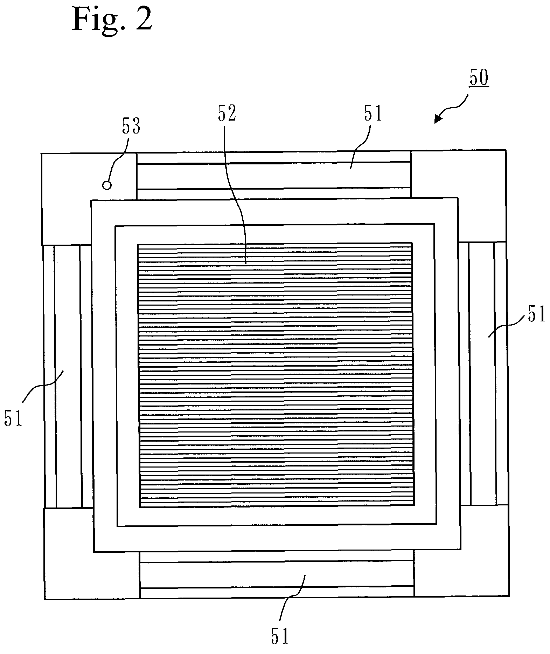

Referring to Figs. 2 to 9, the operation of the area setting device 10 according to Embodiment 1 will be described.

A procedure for the operation of the area setting device 10 according to Embodiment 1 is equivalent to an area setting method according to Embodiment 1. A program that realizes the operation of the area setting device 10 according to Embodiment 1 is equivalent to an area setting program according to Embodiment 1.

In Embodiment 1, as illustrated in Fig. 2, an indoor unit 50 of an air conditioner is assumed to be a four-way cassette type in which air outlets 51 are provided in four directions. The indoor unit 50 is rectangular, and an air inlet 52 is provided in the center portion. In the indoor unit 50, the four air outlet 51 are provided around the air inlet 52, with air outlet directions shifted by 90 degrees each. A light emitter 53 or the like exists outside the air inlet 52 in an area other than the air outlets 51.

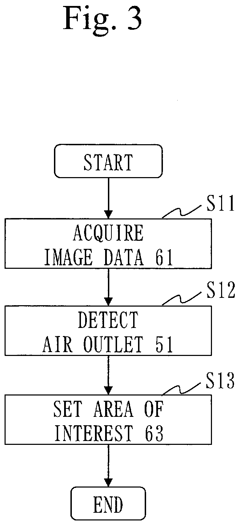

Referring to Fig. 3, a flow of processing by the area setting device 10 according to Embodiment 1 will be described.

### (Step S11: Image acquisition process)

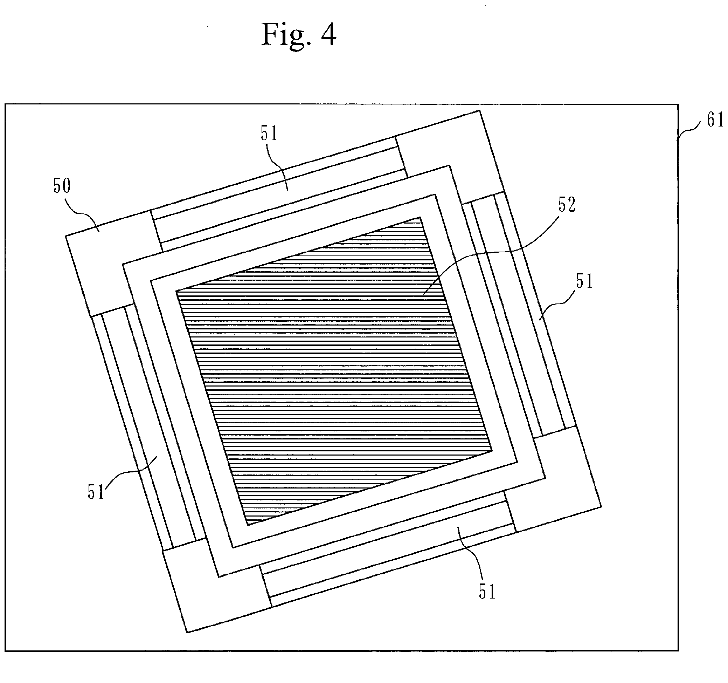

The image acquisition unit 21 acquires image data 61 obtained by capturing an image of the indoor unit 50 with an imaging device. It is assumed here that the image data 61 indicated in Fig. 4 is acquired. The image acquisition unit 21 writes the image data 61 to the memory 12.

### (Step S12: Air outlet detection process)

The air outlet detection unit 22 detects the air outlets 51 from the image data 61 acquired in step S11.

Specifically, the air outlet detection unit 22 reads the image data 61 from the memory 12. The air outlet detection unit 22 gives the image data 61 as input to an object detection model. The object detection model is a machine learning model such as YOLO. YOLO is an abbreviation for You Only Look Once. The object detection model detects an area of the air outlet 51 that appears in the image data 61. The air outlet detection unit 22 acquires the area detected by the object detection model as a detected area 62. The detected area is assumed here to be a rectangular area with sides parallel to the vertical axis and sides parallel to the horizontal axis of the image data 61.

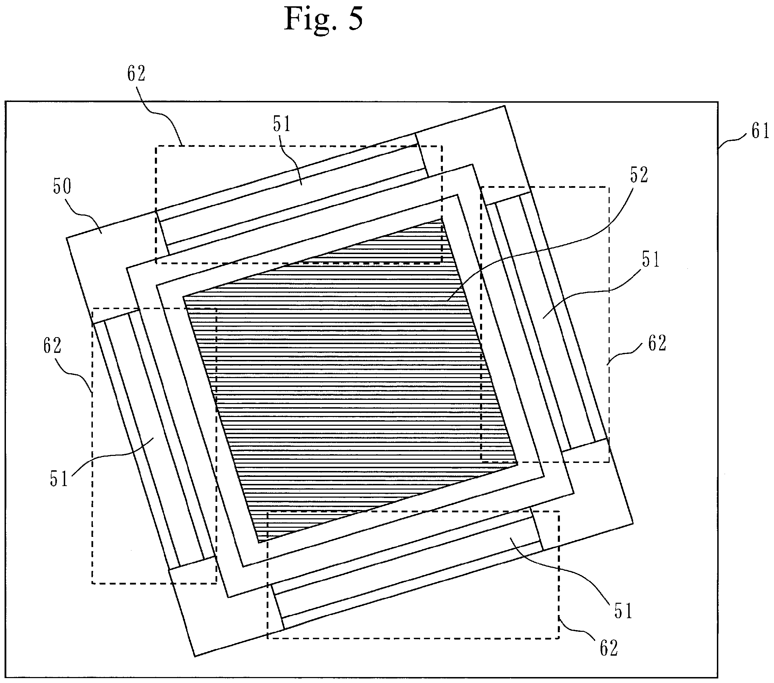

In Embodiment 1, the indoor unit 50 is the four-way cassette type. Therefore, as illustrated in Fig. 5, the air outlet detection unit 22 detects the four air outlets 51 provided in four directions. In other words, the detected areas 62 of the four air outlets 51 are individually acquired.

The object detection model is generated using, as input, pieces of learning data generated by performing at least one of resizing, rotating, and adjusting brightness on pieces of image data obtained by capturing images of the indoor unit 50. This makes it possible to appropriately detect the air outlets 51 even when the image data 61 captured under various distance, orientation, and lighting conditions is given as input.

In addition, the object detection model is generated using, as learning data, pieces of image data obtained by capturing the indoor unit 50 in which the air outlets 51 have different opening degrees. This makes it possible to appropriately detect the air outlets 51 even when the air outlets 51 have different opening degrees.

### (Step S13: Area setting process)

The area setting unit 23 sets an area of interest 63 to be a range in which a detection target is to be detected in the image data 61, based on the detected areas 62 of the air outlets detected in step S12. A specific example of the detection target is the light emitter 53 or an identification number.

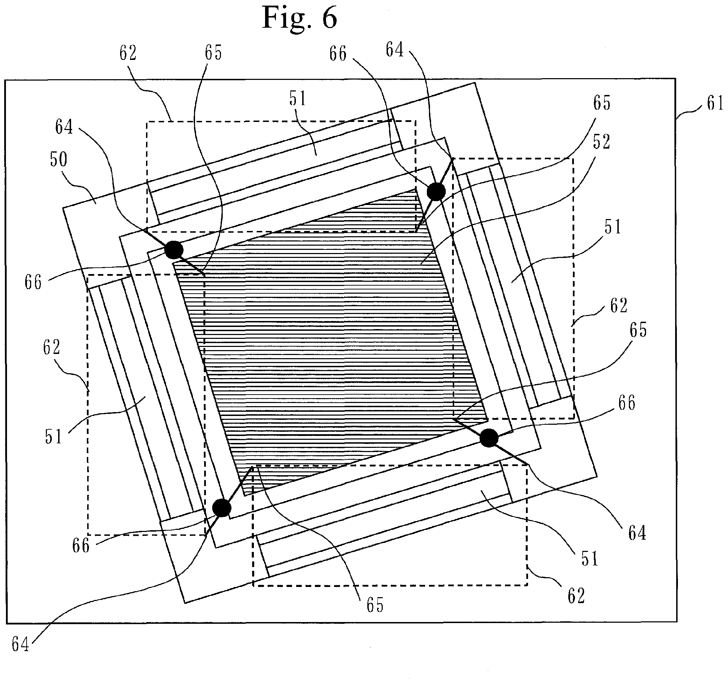

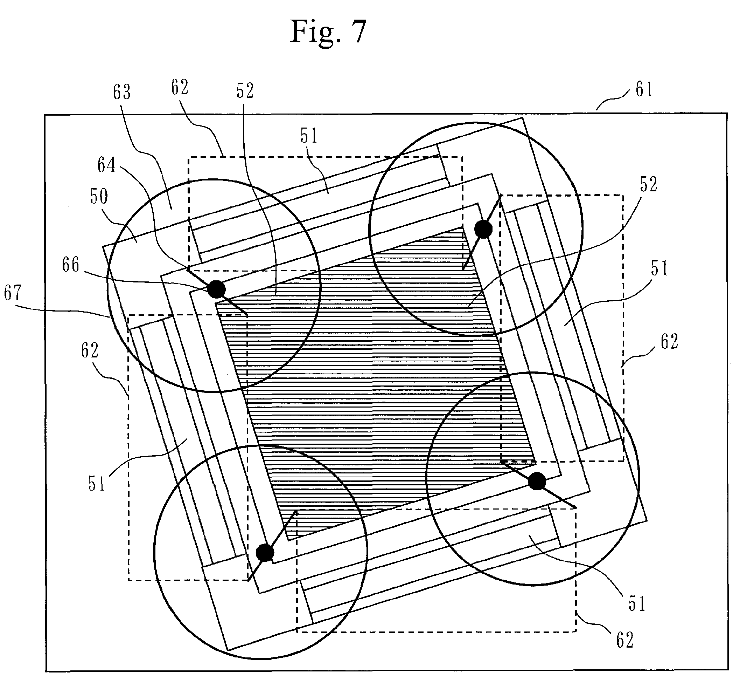

Referring to Figs. 6 and 7, this will be described specifically.

The area setting unit 23 sets each of the detected areas 62 of the four air outlets as the target detected area 62. As indicated in Fig. 6, the area setting unit 23 sets, as a reference point 66, the midpoint of a line segment connecting a start point 64 in the target detected area 62 with an end point located nearby among end points 65 in the other detected areas 62. At this time, the area setting unit 23 sets a point on one short side of the target detected area 62 as the start point 64, and sets a point in the other short side of each of the other detected areas 62 as the end point 65.

In Fig. 6, when the detected area 62 is viewed from the center of the air outlet 51, the inner end point of the left short side is the start point 64, and the inner end point of the right short side is the end point 65. Each start point 64 is connected with the nearest end point 65, and their midpoint is set as the reference point 66.

As indicated in Fig. 7, the area setting unit 23 sets a reference figure 67 whose center is the reference point 66. The reference figure 67 is a shape such as a rectangle or an ellipse. The area setting unit 23 sets the range within the reference figure 67 as the area of interest 63.

When setting the reference figure 67, the area setting unit 23 sets the reference figure 67 of a size depending on the size of the detected area 62 of the target air outlet 51. The area setting unit 23 sets the reference figure 67 that is shaped depending on the positional relationship of the four detected areas 62. The area setting unit 23 sets the reference figure 67 that is rotated depending on the positional relationship of the four detected areas 62. The reference figure 67 is resized and rotated in this way because the indoor unit 50 appears differently depending on the imaging distance and direction. The imaging distance is the distance between the imaging device and the indoor unit 50.

The size of the detected area 62 is the area of the detected area 62, or the length of the long side and the length of the short side. Similarly, the size of the reference figure 67 is the area of the reference figure 67, or the length of the long side and the length of the short side or the length of the major axis and the length of the minor axis.

Setting methods for the reference figure 67 will be described specifically.

### <Setting method 1>

The area setting unit 23 increases the size of the reference figure 67 as the size of the detected area 62 increases. Specifically, a reference size of the detected area 62 and a standard size of the reference figure 67 are determined in advance. The area setting unit 23 calculates a ratio of the size of the detected area 62 that has been detected to the reference size. Then, the area setting unit 23 adjusts the size of the reference figure 67 by multiplying the standard size of the reference figure 67 by the calculated ratio.

### <Setting method 2>

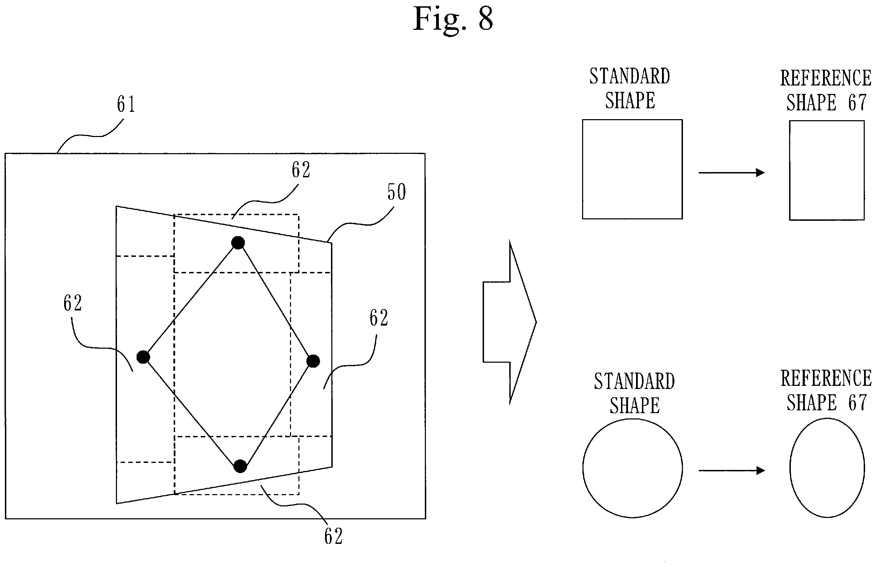

The area setting unit 23 adjusts the shape of the reference figure 67 based on the positional relationship of the centers of the four detected areas 62. Specifically, a reference shape when the centers of the four air outlets 51 are connected is determined in advance. The reference shape may be considered to be a square. This is because when an image of the indoor unit 50 is captured from directly below, connecting the centers of the four air outlet 51 results in a square. As indicated in Fig. 8, the area setting unit 23 determines a distortion, relative to the reference shape, of the shape formed by connecting the centers of the four detected areas 62 that have been detected. The area setting unit 23 adjusts the shape of the reference figure 67 by distorting the reference figure 67 according to the determined distortion.

In Fig. 8, the shape formed by connecting the centers of the four detected areas 62 is not a square but a rectangle that is squashed laterally. Therefore, if the reference shape of the reference figure 67 is a square, the lateral sides are adjusted to be shorter than the longitudinal sides. If the reference shape of the reference figure 67 is a circle, it is adjusted to an ellipse with the major axis in the longitudinal direction and the minor axis in the lateral direction.

### <Setting method 3>

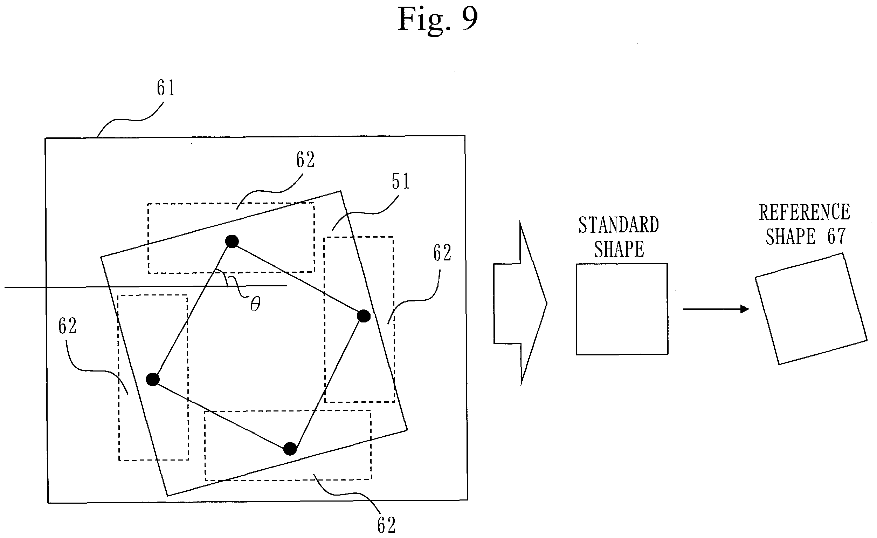

The area setting unit 23 sets the reference figure 67 that is rotated depending on the positional relationship of the centers of the four detected areas 62. Specifically, a reference shape formed when the centers of the four air outlets 51 are connected is determined in advance. The reference shape may be considered to be a square whose sides are each parallel to the long side or short side of the image data. As indicated in Fig. 9, the area setting unit 23 determines a rotation angle, relative to the reference shape, of the shape formed by connecting the centers of the four detected areas 62 that have been detected. For example, the area setting unit 23 determines the rotation angle by determining an angle θ, relative to the long side of the image data 61, of one of the sides. The area setting unit 23 rotates the reference figure 67 by the determined rotation angle.

The area of interest 63 set by the area setting unit 23 is output to an external device or the like that detects the detection target. If the area setting device 10 includes a function for detecting the detection target, the area of interest 63 is output to the function for detecting the detection target.

### *** Effects of Embodiment 1 ***

As described above, the area setting device 10 according to Embodiment 1 sets the area of interest 63 based on the detected areas 62 of the air outlets 51. In the indoor unit 50 of the air conditioner of a four cassette type, the positional relationship of the air outlets 51 and the light emitter 53 or the like, which is the detection target, is roughly determined. In addition, the air outlets 51 are relatively large in size and easy to detect. Therefore, by setting the area of interest 63 based on the detected areas 62 of the air outlets 51, the area of interest 63 that is appropriate can be set.

By setting the area of interest 63, the area in which the detection target is to be detected is narrowed down. Therefore, it is possible to reduce the likelihood of mistakenly detecting an object with similar characteristics to those of the detection target. As a result, the detection target can be detected with high accuracy.

The detection target is assumed to be the light emitter 53 such as an LED. In this case, by reading lighting or blinking of the light emitter 53 using a terminal such as a smartphone, operating information of the air conditioner can be transmitted to the terminal. It is conceivable to use the transmitted operating information for maintenance of the air conditioner, for example. Detecting the light emitter 53 with high accuracy using the terminal allows the operating information to be grasped accurately.

The detection target is assumed to be the identification number of the air outlet 51. In this case, by reading the identification number using a terminal such as a smartphone, the air outlet 51 that needs to be operated can be operated from the terminal. Detecting the identification number with high accuracy using the terminal allows the exact air outlet 51 to be operated.

### *** Other Configurations ***

### <Variation 1>

In Embodiment 1, the functional components are realized by software. However, as Variation 1, the functional components may be realized by hardware. With regard to this Variation 1, differences from Embodiment 1 will be described.

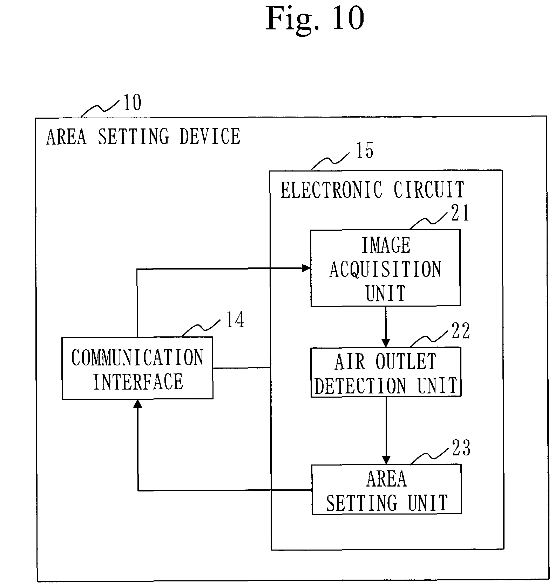

Referring to Fig. 10, a configuration of the area setting device 10 according to Variation 1 will be described.

When the functional components are realized by hardware, the area setting device 10 includes an electronic circuit 15 in place of the processor 11, the memory 12, and the storage 13. The electronic circuit 15 is a dedicated circuit that realizes the functions of the functional components, the memory 12, and the storage 13.

The electronic circuit 15 is assumed to be a single circuit, a composite circuit, a programmed processor, a parallel-programmed processor, a logic IC, a GA, an ASIC, or an FPGA. GA is an abbreviation for gate array. ASIC is an abbreviation for application specific integrated circuit. FPGA is an abbreviation for field-programmable gate array.

The functional components may be realized by one electronic circuit 15, or the functional components may be distributed to and realized by a plurality of electronic circuits 15.

### <Variation 2>

As Variation 2, some of the functional components may be realized by hardware, and the rest of the functional components may be realized by software.

Each of the processor 11, the memory 12, the storage 13, and the electronic circuit 15 is referred to as processing circuitry. That is, the functions of the functional components are realized by the processing circuitry.

### Embodiment 2.

Embodiment 2 differs from Embodiment 1 in that the area setting device 10 detects the light emitter 53, which is the detection target. In Embodiment 2, this difference will be described, and description of the same aspects will be omitted.

### *** Description of Configuration ***

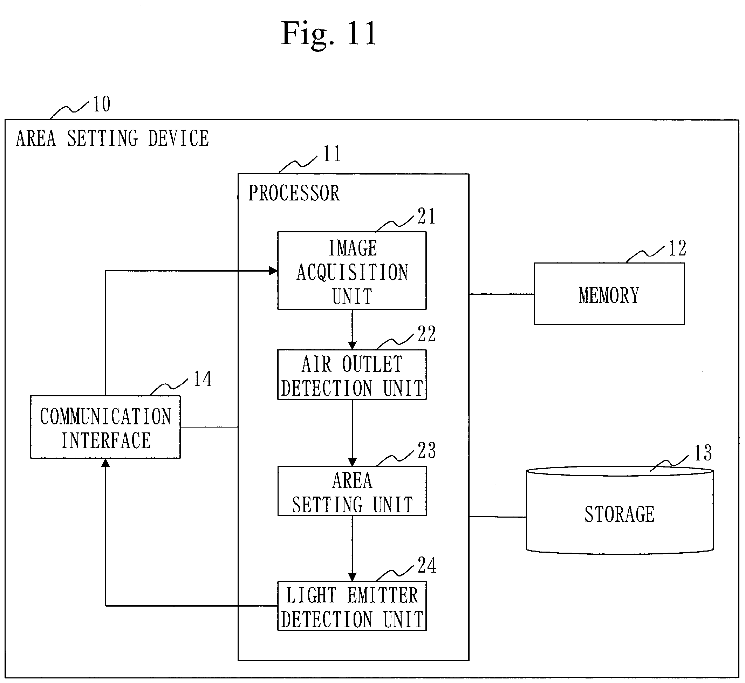

Referring to Fig. 11, a configuration of the area setting device 10 according to Embodiment 2 will be described.

The area setting device 10 differs from the area setting device 10 illustrated in Fig. 1 in that a light emitter detection unit 24 is included as a functional component. The functions of the light emitter detection unit 24 are realized by software or hardware as with the other functional components.

### *** Description of Operation ***

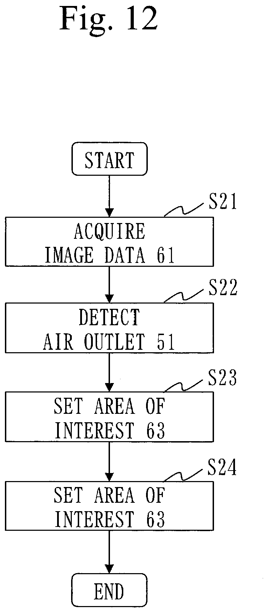

Referring to Fig. 12, the operation of the area setting device 10 according to Embodiment 2 will be described.

A procedure for the operation of the area setting device 10 according to Embodiment 2 is equivalent to the area setting method according to Embodiment 2. A program that realizes the operation of the area setting device 10 according to Embodiment 2 is equivalent to the area setting program according to Embodiment 2.

Referring to Fig. 12, a flow of processing by the area setting device 10 according to Embodiment 2 will be described.

The processes of steps S21 to S23 are the same as the processes of steps S11 to S13 in Fig. 3.

### (Step S24: Light emitter detection process)

The light emitter detection unit 24 detects the light emitter 53 from the area of interest 63 set in step S23. In Embodiment 2, the detection target is the light emitter 53.

Specifically, (1) when the light emitter 53 in a lit state is to be detected, the light emitter detection unit 24 converts the image into an HSV color space. HSV is an abbreviation for hue, saturation, and value. The light emitter detection unit 24 extracts, as an object, pixels that fall within the range between a lower limit threshold and an upper limit threshold of HSV pixel values. (2) When the light emitter 53 in a blinking state is to be detected, the light emitter detection unit 24 converts each of consecutive pieces of the image data 61 into an HSV color space to generate converted data. The light emitter detection unit 24 calculates a difference between pieces of converted data of two chronologically consecutive pieces of the image data 61. The light emitter detection unit 24 extracts, as an object, pixels whose difference is greater than a threshold. When the light emitter 53 in a blinking state is to be detected, the light emitter detection unit 24 may convert the image into an RGB color space or grayscale, instead of an HSV color space.

The light emitter detection unit 24 detects an object whose size is smaller than a reference size as the light emitter 53 among detected objects. A size is a perimeter or an area. If a plurality of light emitters 53 are detected from the image data 61, the light emitter detection unit 24 detects the light emitter 53 whose center of gravity is located closest to the center of the area of interest 63. If there are a plurality of light emitters 53, a specified number of light emitters 53 are detected sequentially, starting from one closest to the center of the area of interest 63. There are four areas of interest 63 here. Close to the center of the area of interest 63 means close to the center of one of the areas of interest 63.

If the light emitters 53 close to each other need to be extracted as one object, the light emitter detection unit 24 may perform pixel expansion processing before object extraction. If the position of the light emitter 53 is included in the detected area 62 of the air outlet 51, the light emitter detection unit 24 may determine that it is not the light emitter 53.

### *** Effects of Embodiment 2 ***

As described above, the area setting device 10 according to Embodiment 2 detects the light emitter 53, which is the detection target, from the area of interest 63. This allows the area setting device 10 to acquire operating information of the air conditioner, for example. The area setting device 10 may use the operating information to perform some control, or may output the operating information to an external device.

The area setting device 10 according to Embodiment 2 uses the size to detect the light emitter 53. When the light emitter 53 is an LED, the size of the light emitter 53 is relatively small. Therefore, by using the size, the light emitter 53 can be detected with high accuracy.

The area setting device 10 according to Embodiment 2 preferably detects the light emitter 53 that is closer to the center position of the area of interest 63. This increases the likelihood that only the light emitter 53 that is appropriate will be detected even when there are objects with characteristics similar to those of the light emitter 53 in the area of interest 63.

"Unit" in the above description may be interpreted as "circuit", "step", "procedure", "process", or "processing circuitry".

The embodiments and variations of the present disclosure have been described above. Two or more of these embodiments and variations may be implemented in combination. Alternatively, one of them or two or more of them may be partially implemented. The present disclosure is not limited to the above embodiments and variations, and various modifications can be made as necessary.

### Reference Signs List

10: area setting device, 11: processor, 12: memory, 13: storage, 14: communication interface, 15: electronic circuit, 21: image acquisition unit, 22: air outlet detection unit, 23: area setting unit, 24: light emitter detection unit, 50: indoor unit, 51: air outlet, 52: air inlet, 53: light emitter, 61: image data, 62: detected area, 63: area of interest, 64: start point, 65: end point, 66: reference point, 67: reference figure.

## Claims

1. An area setting device comprising:
an air outlet detection unit to detect an air outlet from image data captured of an indoor unit of an air conditioner; and
an area setting unit to set an area of interest based on a detected area of the air outlet detected by the air outlet detection unit, the area of interest being a range in which a detection target is to be detected in the image data.

2. The area setting device according to claim 1,
wherein the indoor unit is a four-way cassette type in which air outlets are provided in four directions,
wherein the air outlet detection unit detects four air outlets provided in the four directions, and
wherein the area setting unit treats each of detected areas of the four air outlets as a target detected area, and sets the area of interest based on a point on a line segment connecting a start point in the target detected area with an end point located nearby among end points in other ones of the detected areas.

3. The area setting device according to claim 2,
wherein the area setting unit sets a reference figure whose center is a point on the line segment, and sets a range within the reference figure as the area of interest.

4. The area setting device according to claim 3,
wherein the area setting unit sets the reference figure of a size depending on a size of the target detected area of an air outlet.

5. The area setting device according to claim 3 or 4,
wherein the area setting unit sets the reference figure whose shape depends on a positional relationship of the detected areas of the four air outlets.

6. The area setting device according to any one of claims 3 to 5,
wherein the area setting unit sets the reference figure that is rotated depending on a positional relationship of the detected areas of the four air outlets.

7. The area setting device according to any one of claims 2 to 6,
wherein the detected area is a rectangle, and
wherein the area setting unit treats a point on one short side in the target detected area as a start point, and treats a point on the other short side in each of the other detected areas as an end point.

8. The area setting device according to any one of claims 1 to 7,
wherein the air outlet detection unit detects an air outlet from image data captured of the indoor unit using an object detection model that takes, as input, image data and detects an air outlet, the object detection model being generated using, as input, learning data generated by performing at least one of resizing, rotating, and adjusting brightness on image data of an indoor unit.

9. The area setting device according to any one of claims 1 to 7,
wherein the air outlet detection unit detects an air outlet from image data captured of the indoor unit using an object detection model that takes, as input, image data and detects an air outlet, the object detection model being generated using, as input, learning data including pieces of image data of an indoor unit in each of which an opening degree of the air outlet is different.

10. The area setting device according to any one of claims 1 to 9, further comprising
a light emitter detection unit to detect a light emitter whose size is smaller than a reference size from the area of interest set by the area setting unit.

11. The area setting device according to claim 10,
wherein the light emitter detection unit detects a light emitter located close to a center of the area of interest among light emitters whose size is smaller than the reference size.

12. An area setting method comprising:
detecting an air outlet from image data captured of an indoor unit of an air conditioner, by a computer; and
setting an area of interest based on a detected area of the air outlet that has been detected, the area of interest being a range in which a detection target is to be detected in the image data, by the computer.

13. An area setting program that causes a computer to function as an area setting device to perform:
an air outlet detection process of detecting an air outlet from image data captured of an indoor unit of an air conditioner; and
an area setting process of setting an area of interest based on a detected area of the air outlet detected by the air outlet detection process, the area of interest being a range in which a detection target is to be detected in the image data.
